# EUROPEAN PATENT SPECIFICATION

(11) **EP 2 677 703 B1**
(45) Date of publication and mention of the grant of the patent: **09.09.2015**
(21) Application number: 11783010.9
(22) Date of filing: 26.05.2011
(51) Int. Cl.: H04L 12/70

(54) **METHOD AND DEVICE FOR SCHEDULING QUEUE**
VERFAHREN UND VORRICHTUNG ZUR KOORDINATION EINER REIHUNG
PROCÉDÉ ET DISPOSITIF D'ORDONNANCEMENT DE FILES D'ATTENTE

(43) Date of publication of application: 25.12.2013
(73) Proprietor: Huawei Technologies Co., Ltd., Longgang District Shenzhen, Guangdong 518129 (CN)
(72) Inventor: GAO, Zhenghai, Guangdong 518129 (CN); TANG, Cheng, Guangdong 518129 (CN)
(74) Representative: Maiwald Patentanwalts GmbH
(86) International application number: PCT/CN2011/074704
(87) International publication number: WO 2011/144093

(56) References cited:
- CN-A- 1 536 816
- CN-A- 101 252 424
- CN-A- 101 557 346
- US-A1- 2008 212 472
- US-A1- 2010 157 915
- FINE ATHEROS COMMUNICATIONS K MCCLOGHRIE CISCO SYSTEMS J SELIGSON K CHAN NORTEL NETWORKS S HAHN C BELL INTEL A SMITH HARBOUR NETWO: "Differentiated Services Quality of Service Policy Information Base; draft-ietf-diffserv-pib-08.txt", 20020601, vol. diffserv, no. 8, 1 June 2002 (2002-06-01), XP015017354, ISSN: 0000-0004
- BERNET MICROSOFT S BLAKE ERICSSON D GROSSMAN MOTOROLA A SMITH HARBOUR NETWORKS Y: "An Informal Management Model for Diffserv Routers; rfc3290.txt", 20020501, 1 May 2002 (2002-05-01), XP015009068, ISSN: 0000-0003

## Description

### TECHNICAL FIELD

The present invention relates to the communications field, and in particularly, to a queue scheduling method and apparatus.

### BACKGROUND

A current network technology supports one user in carrying on multiple network services simultaneously, for example, an Internet access service and a voice service of the Internet (Internet). In a case that IP-based network services are continuously increased, and differentiated service requirements of different network services of the user are also continuously increased, a routing device puts data of the different network services in a storage queue for caching, and scheduling based on priorities or weights is performed on the different network services by using a scheduler, where data of a network service with a high priority or a high weight is preferentially sent. Data in each storage queue is sent out according to a sequence of "first-in-first-out".

FINE ATHEROS COMMUNICATIONS K MCCLOGHRIE CISCO SYSTEMS J SELIGSON K CHAN NORTEL NETWORKS S HAHN C BELL INTEL A SMITH HARBOUR NETWO: "Differentiated Services Quality of Service Policy Information Base; draft-ietf-diffserv-pib-08.txt" discloses a set of provisioning classes specifically for configuring QoS Policy for Differentiated Services. BERNET MICROSOFT S BLAKE ERICSSON D GROSSMAN MOTOROLA A SMITH HARBOUR NETWORKS Y: "An Informal Management Model for Diffserv Routers; rfc3290.txt" discloses an informal management model of Differentiated Services (Diffserv) routers for use in their management and configuration. US 2008/212472 A1 discloses a packet switching fabric.

In an actual application, a network allocates fixed resources of a storage queue and a scheduler to each accessing user, but among users with allocated fixed resources of storage queues and schedulers, after accessing the network, a part of the users do not send data of network services, so that storage queues and schedulers occupied by this part of the users are vacant, and therefore, resources of storage space and the schedulers are wasted.

### SUMMARY

Embodiments of the present invention provide a queue scheduling method and apparatus, so as to reduce waste of storage space and a scheduler.

To achieve the foregoing objective, the embodiments of the present invention adopt the following technical solutions:
A queue scheduling method includes:
   querying, by a routing device according to a network service, a preset correspondence table after receiving the network service sent by a user, and obtaining a storage queue corresponding to the network service, where the correspondence table includes correspondence between the network service and the storage queue;
   storing data of the network service in the storage queue corresponding to the network service; and
   allocating a scheduler to the storage queue;
   after the storing data corresponding to the network service in the storage queue corresponding to the network service, the method further comprises:
      determining, by querying, whether there is data putting in the storage queue corresponding to the network service in a predetermined time range; and
      detaching the correspondence between the network service and the storage queue if there is no data putting in the storage queue corresponding to the network service in the predetermined time range, and releasing the storage queue corresponding to the network service and the scheduler allocated to the storage queue.
A queue scheduling apparatus, used in a routing device that sends data, includes:
   a storage queue obtaining unit, configured to query, according to a network service, a preset correspondence table after receiving the network service sent by a user, and obtain a storage queue corresponding to the network service, where the correspondence table includes correspondence between the network service sent by the user and the storage queue;
   a data storage unit, configured to store data of the network service in the storage queue corresponding to the network service; and
   a first scheduler allocating unit, configured to allocate a scheduler to the storage queue;
   the apparatus further comprising:
      a data querying unit, configured to, after the data corresponding to the network service is stored in the storage queue corresponding to the network service, determine, by
      querying, whether there is data putting in the storage queue corresponding to the network service in a predetermined time range; and
      a resource releasing unit, configured to detach the correspondence between the network service and the storage queue when there is no data putting in the storage queue corresponding to the network service in the predetermined time range, and release the storage queue corresponding to the network service and the scheduler allocated to the storage queue.

In the queue scheduling method and apparatus provided by the embodiments of the present invention, after a network service sent by a user is received, a storage queue corresponding to the network service is obtained, data of the network service is stored in the storage queue corresponding to the network service, and a scheduler is allocated to the storage queue. Compared with the prior art in which a storage queue and a scheduler are also allocated in a case that there is no user service, occupation of storage space and schedulers is reduced, so that sending of data of network services of more users can be supported.

### BRIEF DESCRIPTION OF DRAWINGS

FIG. 1 is a flowchart of a queue scheduling method according to Embodiment I of the present invention;
FIG. 2 is a flowchart of a queue scheduling method according to Embodiment 2 of the present invention;
FIG. 3 is a flowchart of allocating a scheduler through polling access according to Embodiment 2 of the present invention;
FIG. 4 is a schematic diagram of allocating storage queues and schedulers by using a user as a unit according to Embodiment 2 of the present invention;
FIG. 5 is a block diagram of a queue scheduling apparatus according to Embodiment 3 of the present invention;
FIG. 6 is a block diagram of another queue scheduling apparatus based on FIG. 5;
FIG. 7 is a block diagram of another queue scheduling apparatus based on FIG. 6;
FIG. 8 is a block diagram of another queue scheduling apparatus based on FIG. 7;
FIG. 9 is a block diagram of another queue scheduling apparatus based on FIG. 8; and
FIG. 10 is a block diagram of further description of a storage queue obtaining unit according to Embodiment 3 of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

### Embodiment 1

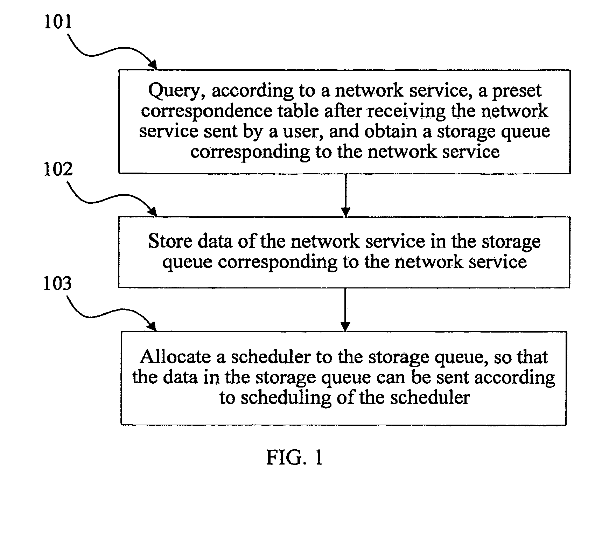

In a network, a large number of users are connected to a routing device, and data of network services of the users is sent to a destination through the routing device. Usually, one user may carry on one or more network services, for example, a voice service, an Internet connection service, and so on. When executing a data sending function, the routing device allows data of one network service of one user to be sent at one time, so that in a case that data of multiple users and data of multiple network services exist, data sending needs to be selectively performed through scheduling of schedulers. On this basis, an embodiment of the present invention provides a queue scheduling method, and as shown in FIG. 1, the method includes:

101: A routing device queries, according to a network service, a preset correspondence table after receiving the network service sent by a user, and obtains a storage queue corresponding to the network service; where the correspondence table records correspondence between the network service sent by the user and the storage queue.

Optionally, the storage queue is a storage component disposed on the routing device. When the user accesses the routing device, and data traffic occurs in the network service of the accessing user, the correspondence between the network service and the storage queue is established, and the correspondence is stored in the correspondence table.

102: Store data of the network service in the storage queue corresponding to the network service.

When the data of the network service is sent from the user to the routing device, the data of the network service is stored in the corresponding storage queue according to the correspondence recorded in the correspondence table.

103: Allocate a scheduler to the storage queue, so that the data in the storage queue can be sent according to scheduling of the scheduler.

Optionally, a scheduler in the routing device is allocated to a storage queue already storing data. In the routing device, the scheduler is usually a hardware device formed by a logic component, and is configured to selectively schedule sending of data of different network services of different users. The scheduler schedules each storage queue already storing data, and selects a storage queue according to a preset rule (for example, data of a network service with sending traffic exceeding a predetermined traffic threshold is suspended from being sent, and/or priorities and weights of the different network services are different), and data stored in the selected storage queue is sent. Taking the weight as an example for illustration, if a weight of a network service in a storage queue M is higher than a weight of a network service in a storage queue N, when data sending is performed, a frequency of sending the data in the storage queue M is higher than a frequency of sending the data in the storage queue N, where a specific sending frequency may be set according to an actual situation of the routing device.

Optionally, in the routing device, the data in the storage queue may be sent according to a sequence of "first-in-first-out". For example, a data packet 1, a data packet 2, and a data packet 3 are sequentially stored in a storage queue X according to a time sequence. Therefore, when the storage queue X is scheduled by the scheduler, and when data packet sending is performed, the data packet sending is performed according to a sequence of the data packet 1, the data packet 2, and the data packet 3.

According to the queue scheduling method provided by the embodiment of the present invention, after a network service sent by a user is received, a storage queue corresponding to the network service is obtained, data corresponding to the network service is stored in the storage queue corresponding to the network service, and a scheduler is allocated to the storage queue. Compared with the prior art in which a storage queue and a scheduler are also allocated in a case that there is no user service, occupation of storage space and schedulers is reduced, so that sending of data of network services of more users can be supported.

### Embodiment 2

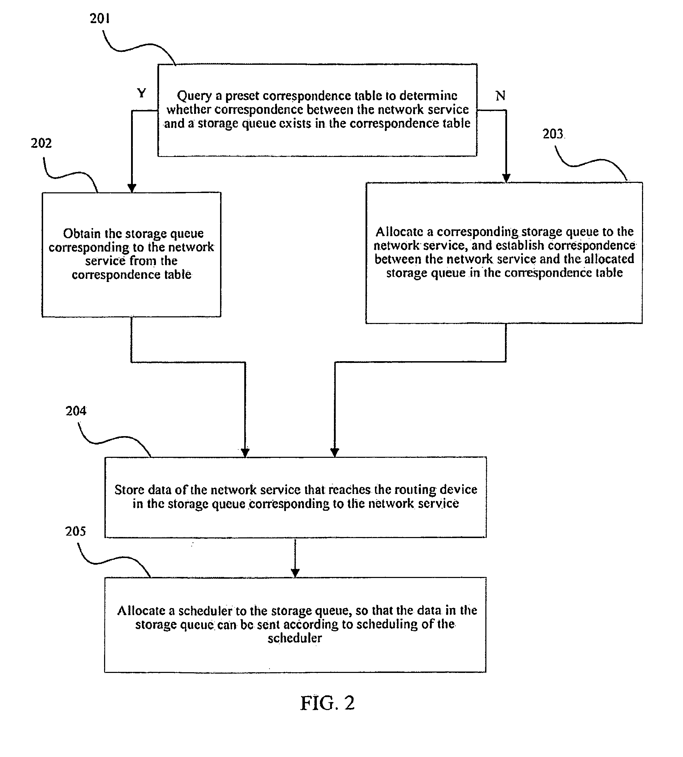

An embodiment of the present invention provides a queue scheduling method, and as shown in FIG. 2, the method includes:

201: Query, according to a network service, a preset correspondence table when data of the network service reaches a routing device, and if correspondence between the network service and a storage queue exists in the correspondence table, execute 202; otherwise, execute 203.

The storage queue is a storage component disposed on the routing device. When a user accesses the routing device, and data traffic occurs in a network service of the accessing user, the correspondence between the network service and the storage queue is established in the correspondence table, and the correspondence is stored in the correspondence table.

202: Obtain the storage queue corresponding to the network service from the correspondence table. Then, execute 204.

When the data of the network service is sent from the user to the routing device, the data of the network service is stored in the corresponding storage queue according to the established correspondence table.

203: Allocate a corresponding storage queue to the network service, and establish correspondence between the network service and the allocated storage queue in the correspondence table.

204: Store the data of the network service that reaches the routing device in the storage queue corresponding to the network service. Then, execute 205.

After the correspondence is established in the correspondence table, data of the network service that subsequently reaches the routing device is stored in the corresponding storage queue according to the correspondence table.

205: Allocate a scheduler to the storage queue, so that the data in the storage queue can be sent according to scheduling of the scheduler.

In the routing device, the scheduler is usually a hardware device formed by a logic component, and is configured to selectively schedule sending of different data. For example, 1000 storage queues are set on the routing device, sequence numbers of which are from 0001 to 1000. A user 1 accesses the routing device. When data traffic occurs in a network service 1 of the user 1, correspondence between the network service 1 and a No. 0001 storage queue is established in the correspondence table of the routing device. After the correspondence is established, the data of the network service 1 that reaches the routing device is stored in the No. 0001 storage queue; in addition, after the correspondence between the network service 1 and the No. 0001 storage queue is established, a scheduler is allocated to the No. 0001 storage queue, and when the No. 0001 storage queue is scheduled by the corresponding scheduler, the routing device dequeues the data in the No. 0001 storage queue for sending. Optionally, in a case that there are at least two users accessing the routing device, a storage queue is only allocated to a network service in which data traffic occurs, and a resource of a scheduler is further obtained, while a user without data traffic does not occupy a storage queue or a scheduler.

Optionally, in the routing device, the data in the storage queue is sent according to a sequence of "first-in-first-out", so that a sequence of sending out the data by the routing device is consistent with a sequence according to which the data reaches the routing device.

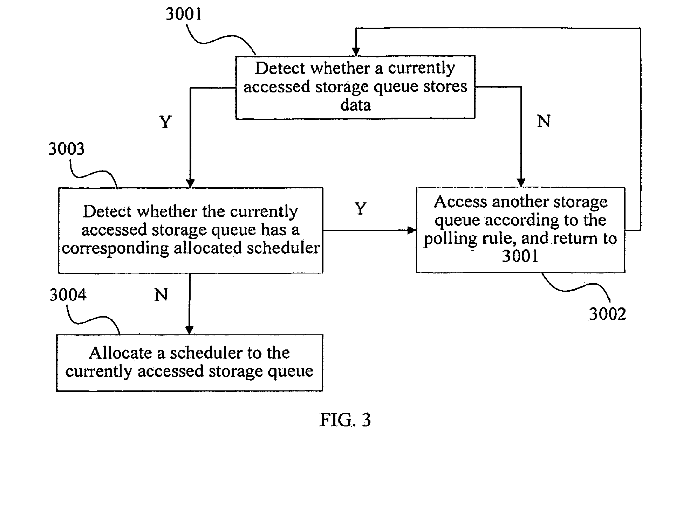

Optionally, in the embodiment of the present invention, the routing device may further perform polling access on all the storage queues according to a preset polling rule. Through the polling access, when an accessed storage queue stores data and does not have an allocated scheduler, a scheduler is allocated to the accessed storage queue. For example, the polling rule may be that traverse access is performed on all the storage queues on the routing device; or different storage queues are accessed according to different frequencies. Through the polling access, when the accessed storage queue stores the data and does not have the allocated scheduler, the scheduler is allocated to the accessed storage queue. Specifically, as shown in FIG. 3, a process of allocating a scheduler through polling access may be performed according to the following steps, including:

3001: Detect whether a currently accessed storage queue stores data, and if the currently accessed storage queue does not store the data, execute 3002; otherwise, execute 3003.

3002: Access another storage queue according to the polling rule, and return to 3001.

3003: Detect whether the currently accessed storage queue has a corresponding allocated scheduler.

If the currently accessed storage queue does not have the corresponding allocated scheduler, turn to 3004, otherwise, turn to 3002.

3004: Allocate a scheduler to the currently accessed storage queue.

After the scheduler is allocated, continue to access another storage queue according to the polling rule.

In addition, in order to release a used but vacant storage queue and scheduler in time, after the data corresponding to the network service is stored in the storage queue corresponding to the network service, whether there is data putting in the storage queue corresponding to the network service in a predetermined time range is determined by querying; if in the predetermined time range, the storage queue having the correspondence with the network service and having the allocated scheduler does not have data all the time (or does not have data all the time in the predetermined number of polling times, for example, in three times of polling access performed on all the storage queues, a part of the storage queues do not store data to be set all the time), the storage queue without the data all the time and a corresponding scheduler are released, and correspondence between the storage queue without the data all the time and a corresponding network service is deleted.

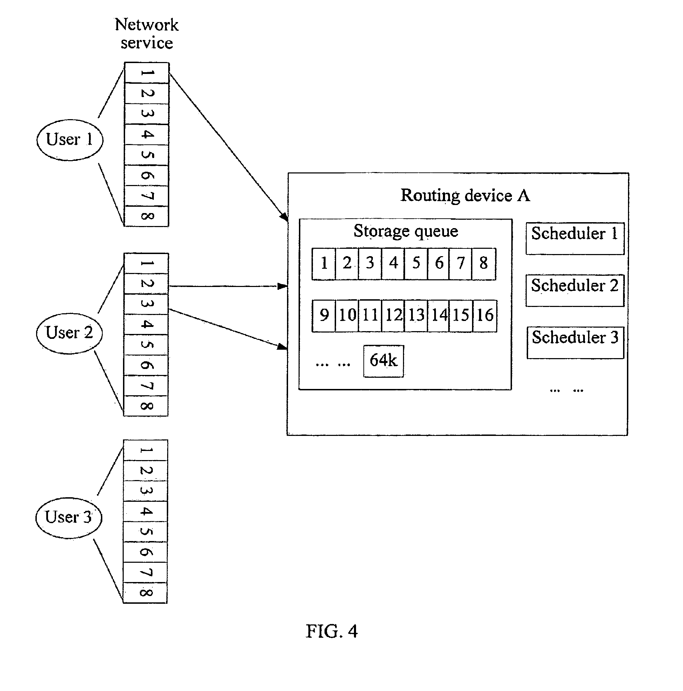

Further, as a common application scenario, storage queues and schedulers are usually allocated by using a user as a unit. In the following, FIG. 4 is taken as an example for illustration. In FIG. 4, there are a user 1, a user 2, and a user 3, and each user may simultaneously carry on eight network services. Assume that 64k storage queues are set on a routing device A connected to a user, where sequence numbers are from 1 to 64k; a certain number of schedulers are further disposed on the routing device A, such as a scheduler 1 and a scheduler 2 in FIG. 4. When the user 1, the user 2, and the user 3 do not have data traffic reaching the routing device A, neither a storage queue nor a scheduler is allocated. In FIG. 4, after data traffic occurs in a network service 1 of the user 1, a network service 2 and a network service 3 of the user 2, the routing device A allocates storage queues: No. 1 to No. 8 storage queues are allocated to the user 1, where No. 1 to No. 8 storage queues correspond to the network service 1 to a network service 8 of the user 1 respectively; and No. 9 to No. 16 storage queues are allocated to the user 2, where No. 9 to No. 16 storage queues correspond to the network service 1 to a network service 8 of the user 2 respectively. In order to reduce actions of repeatedly allocating storage queues, after the data traffic occurs in the user, allocating of eight storage queues may be completed at one time; and definitely, a storage queue may also be only allocated to a network service in which data traffic occurs, which is not limited in the embodiment of the present invention. Correspondence between the network service 1 to the network service 8 of the user 1 and the No. 1 storage queue to the No. 8 storage queue, and correspondence between the network service 1 to the network service 8 of the user 2 and the No. 9 storage queue to the No. 16 storage queue are recorded in the correspondence table. Correspondingly, the scheduler 1 is allocated to schedule the network service 1 to the network service 8 of the user 1; and the scheduler 2 is allocated to schedule the network service 1 to the network service 8 of the user 2. When in the user 1, only the network service 1 has data traffic, the scheduler 1 only schedules data in the storage queue 1; and correspondingly, when in the user 2, only the network service 2 and the network service 3 have data traffic, the scheduler 2 schedules data in the storage queue 10 and the storage queue 11. An allocating action of the scheduler may be performed simultaneously with the polling access of the storage queue. The user 3 does not have data traffic, so even the user 3 accesses the routing device A, a storage queue is not allocated.

Optionally, a secondary scheduler (a scheduler 3 in FIG. 4 is taken as an example) may also be allocated to schedule different users. Before data is sent, a user is first selected through the scheduler 3 (in a case that the user 3 does not have the data traffic, one user is selected from the user 1 and the user 2). If the user 2 is selected, in a case that in the user 2, only the network service 2 and the network service 3 have the data traffic, the scheduler 2 selects a storage queue 10 or a storage queue 11, and data in the select storage queue is sent by the routing device A. The scheduler selects a storage queue according to a preset rule (for example, data of a network service with sending traffic exceeding a predetermined traffic threshold is suspended from being sent, and priorities of different network services are different) in the routing device A.

Expandably, when a large number of users exist, user clusters may be set according to a feature such as user levels of different users, and schedulers with a higher level are allocated to different user clusters. For example, each user may be allocated to different user groups according to payment situations of different users. A user with a payment amount exceeding a predetermined high-level user payment threshold is allocated to a high-level user group, a user with a payment amount not reaching the high-level user payment threshold is allocated to a common user group, and a user group may be selected through the scheduler (a user group scheduler) with the higher level. When data is sent, first, a user group is selected through the user group scheduler (usually, a weight of the high-level user group is higher than that of the common user group, so that a frequency of selecting the high-level user group is higher than a frequency of selecting the common user group). After the user group is selected, a user in the selected user group is selected through the secondary scheduler. Finally, for the selected user, a storage queue is scheduled through the scheduler, and data in the selected storage queue is sent by the routing device.

In the queue scheduling method provided by the embodiment of the present invention, after a network service sent by a user is received, a storage queue corresponding to the network service is obtained, data corresponding to the network service is stored in the storage queue corresponding to the network service, and a scheduler is allocated to the storage queue. Compared with the prior art in which a storage queue and a scheduler are also allocated in a case that there is no user service, occupation of storage space and schedulers is reduced, so that sending of data of network services of more users can be supported.

In addition, through polling access on storage queues, a scheduler may be allocated to a storage queue storing data but not having an allocated scheduler; in addition, when a storage queue is used but does not have data to be stored in the cache queue for a long time, storage space and a scheduler may also be recycled, so that waste of resources of storage space and a scheduler is reduced, and sending of data of network services of more users can be supported.

### Embodiment 3

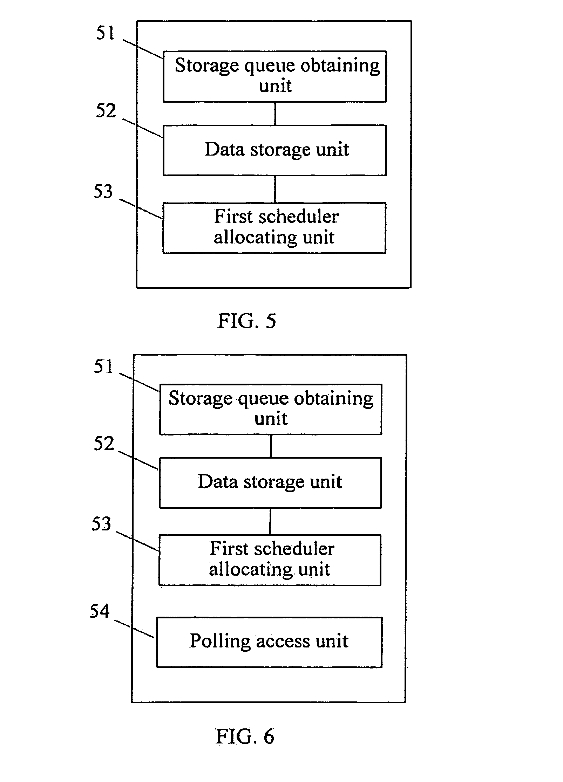

An embodiment of the present invention further provides a queue scheduling apparatus, as shown in FIG. 5, including: a storage queue obtaining unit 51, a data storage unit 52, and a first scheduler allocating unit 53.

The storage queue obtaining unit 51 is configured to query, according to a network service, a preset correspondence table after receiving the network service sent by a user, and obtain a storage queue corresponding to the network service, where the correspondence table records correspondence between the network service sent by the user and the storage queue.

The data storage unit 52 is configured to store data of the network service in the storage queue corresponding to the network service.

The first scheduler allocating unit 53 is configured to allocate a scheduler to the storage queue, so that the data in the storage queue can be sent according to scheduling of the scheduler.

Optionally, as shown in FIG. 6, the apparatus further includes a polling access unit 54, configured to perform polling access on all storage queues according to a preset polling rule.

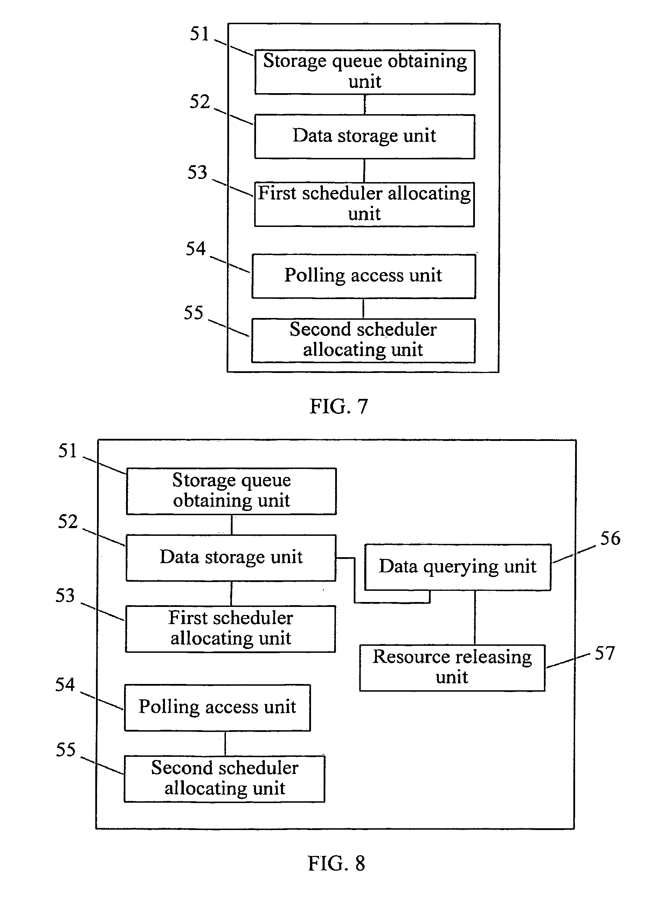

Optionally, as shown in FIG. 7, the apparatus further includes a second scheduler allocating unit 55, configured to allocate a scheduler to an accessed storage queue when the accessed storage queue stores data and does not have an allocated scheduler.

Optionally, as shown in FIG. 8, the apparatus further includes a data querying unit 56 and a resource releasing unit 57.

The data querying unit 56 is configured to, after the data corresponding to the network service is stored in the storage queue corresponding to the network service, determine, by querying, whether there is data putting in the storage queue corresponding to the network service in a predetermined time range.

The resource releasing unit 57 is configured to detach the correspondence between the network service and the storage queue when there is no data putting in the storage queue corresponding to the network service in the predetermined time range, and release the storage queue corresponding to the network service and the scheduler allocated to the storage queue.

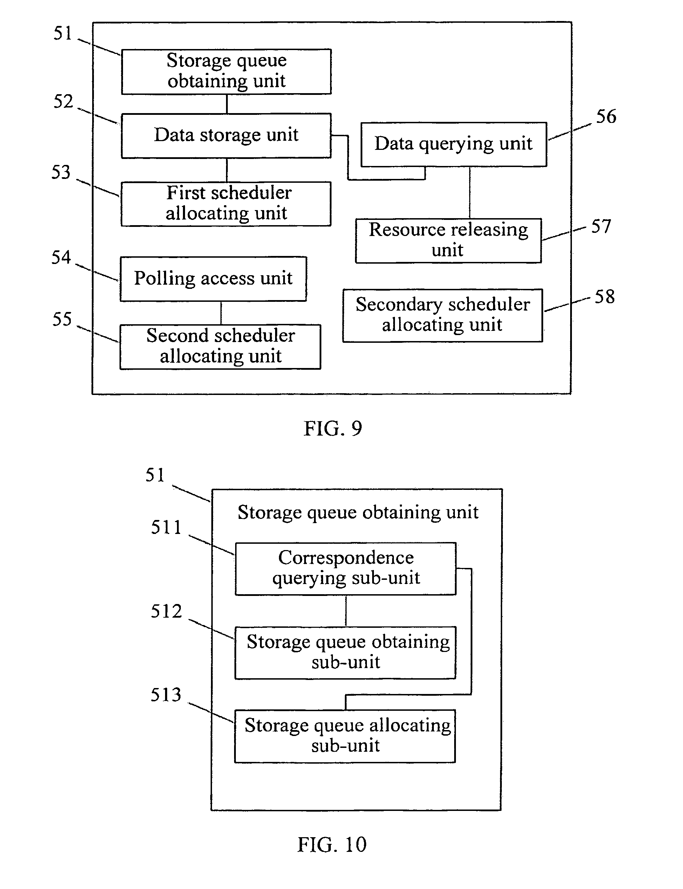

Optionally, as shown in FIG. 9, the apparatus further includes a secondary scheduler allocating unit 58, configured to allocate a secondary scheduler to the user.

Optionally, as shown in FIG. 10, the storage queue obtaining unit 51 further includes: a correspondence querying sub-unit 511, a storage queue obtaining sub-unit 512, and a storage queue allocating sub-unit 513.

The correspondence querying sub-unit 511 is configured to query, according to the network service, the preset correspondence table;
the storage queue obtaining sub-unit 512 is configured to, when the correspondence between the network service and the storage queue exists in the correspondence table, obtain the storage queue corresponding to the network service from the correspondence table; and
the storage queue allocating sub-unit 513 is configured to, when the correspondence between the network service and the storage queue does not exist in the correspondence table, allocate a corresponding storage queue to the network service, and record correspondence between the network service and the allocated storage queue in the correspondence table.

In a routing device, the scheduler is usually a hardware device formed by a logic component, and is configured to selectively schedule sending of different data. For specific description of scheduling, by the scheduler, each storage queue already storing data, reference may be made to the description in Embodiment 1 of the present invention, and details are not repeatedly described here.

Further, as a common application scenario, storage queues and schedulers are usually allocated by using a user as a unit. For relevant description, reference may be made to the description in Embodiment 2 of the present invention, and details are not repeatedly described here.

In the queue scheduling apparatus provided by the embodiment of the present invention, according to correspondence between a network service in which data traffic occurs and a storage queue, data of the network service in which the data traffic occurs is stored in a corresponding storage queue, a resource of a scheduler is allocated to the storage queue, and a storage queue or a scheduler is not allocated to the network service, so that occupation of storage space and schedulers by a user without data traffic is reduced, so that sending of data of network services of more users can be supported.

In addition, through polling access on storage queues, a scheduler may be allocated to a storage queue storing data but not having an allocated scheduler; in addition, when a storage queue does not have data for a long time, storage space and a scheduler may also be recycled, so that waste of resources of storage space and a scheduler is reduced, and sending of data of network services of more users can be supported.

Through description of the foregoing implementation manners, a person skilled in the art may clearly understand that the present invention may be implemented in a manner software plus necessary universal hardware, and definitely, may also be implemented through hardware, but in most cases, the former is a preferred implementation manner. Based on such understanding, the technical solutions of the present invention or the part that makes contributions to the prior art may be substantially embodied in a form of a software product. The computer software product may be stored in a readable storage medium, such as a floppy disk, a hard disk, or an optical disk of a computer, and include several instructions to instruct a computer device (which may be a personal computer, a server, or a network device, or the like) to perform the method described in the embodiments of the present invention.

The foregoing description is merely specific implementation manners of the present invention, but is not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A queue scheduling method, **characterized in** comprising:
querying (101), by a routing device according to a network service, a preset correspondence table after receiving the network service sent by a user, and obtaining (101) a storage queue corresponding to the network service, wherein the correspondence table comprises correspondence between the network service and the storage queue;
storing (102) data of the network service in the storage queue corresponding to the network service; and
allocating (103) a scheduler to the storage queue;
after the storing (102) data corresponding to the network service in the storage queue corresponding to the network service, the method further comprises:
determining, by querying, whether there is data putting in the storage queue corresponding to the network service in a predetermined time range; and
detaching the correspondence between the network service and the storage queue if there is no data putting in the storage queue corresponding to the network service in the predetermined time range, and releasing the storage queue corresponding to the network service and the scheduler allocated to the storage queue.

2. The method according to claim 1, **characterized in that** the querying (101), according to a network service, a preset correspondence table, and obtaining (101) a storage queue corresponding to the network service comprise:
querying (201), according to the network service, the preset correspondence table;
if the correspondence between the network service and the storage queue exists in the correspondence table, obtaining (202) the storage queue corresponding to the network service from the correspondence table; and
if the correspondence between the network service and the storage queue does not exist in the correspondence table, allocating (203) a corresponding storage queue to the network service, and recording correspondence between the network service and the allocated storage queue in the correspondence table.

3. The method according to claim 1 or 2, **characterized in** further comprising:
performing polling access on all storage queues according to a preset polling rule; and
allocating a scheduler to an accessed storage queue when the accessed storage queue stores data and does not have an allocated scheduler.

4. The method according to claim 1, **characterized in** further comprising:
allocating a secondary scheduler to the user; wherein the secondary scheduler is configured to perform scheduling on the user.

5. A queue scheduling apparatus, used in a routing device that sends data, **characterized in** comprising:
a storage queue obtaining unit (51), configured to query, according to a network service, a preset correspondence table after receiving the network service sent by a user, and obtain a storage queue corresponding to the network service, wherein the correspondence table comprises correspondence between the network service sent by the user and the storage queue;
a data storage unit (52), configured to store data of the network service in the storage queue corresponding to the network service; and
a first scheduler allocating unit (53), configured to allocate a scheduler to the storage queue;
the apparatus further comprising:
a data querying unit (56), configured to, after the data corresponding to the network service is stored in the storage queue corresponding to the network service, determine, by querying, whether there is data putting in the storage queue corresponding to the network service in a predetermined time range; and
a resource releasing unit (57), configured to detach the correspondence between the network service and the storage queue when there is no data putting in the storage queue corresponding to the network service in the predetermined time range, and release the storage queue corresponding to the network service and the scheduler allocated to the storage queue.

6. The apparatus according to claim 5, **characterized in that** the storage queue obtaining unit (51) comprises:
a correspondence querying sub-unit (511), configured to query, according to the network service, the preset correspondence table;
a storage queue obtaining sub-unit (512), configured to, when the correspondence between the network service and the storage queue exists in the correspondence table, obtain the storage queue corresponding to the network service from the correspondence table; and
a storage queue allocating sub-unit (513), configured to, when the correspondence between the network service and the storage queue does not exist in the correspondence table, allocate a corresponding storage queue to the network service, and record correspondence between the network service and the allocated storage queue in the correspondence table.

7. The apparatus according to claim 5 or 6, **characterized in** further comprising:
a polling access unit (54), configured to perform polling access on all storage queues according to a preset polling rule.

8. The apparatus according to claim 7, **characterized in** further comprising:
a second scheduler allocating unit (55), configured to allocate a scheduler to an accessed storage queue when the accessed storage queue stores data and does not have an allocated scheduler.

9. The apparatus according to claim 5, **characterized in** further comprising:
a secondary scheduler allocating unit (58), configured to allocate a secondary scheduler to the user.

## Patentansprüche

1. Verfahren zur Koordination einer Reihung, **dadurch gekennzeichnet, dass** es umfasst:
Abfragen (101), durch eine Wegauswahlvorrichtung gemäß einem Netzdienst, einer voreingestellten Entsprechungstabelle, nachdem der von einem Benutzer gesendete Netzdienst empfangen wurde, und Erhalten (101) einer Speicherreihung entsprechend dem Netzdienst, wobei die Entsprechungstabelle eine Entsprechung zwischen dem Netzdienst und der Speicherreihung umfasst;
Speichern (102) von Daten des Netzdienstes in der Speicherreihung entsprechend dem Netzdienst; und
Zuweisen (103) eines Koordinierelements (Scheduler) zu der Speicherreihung;
nach dem Speichern (102) der Daten entsprechend dem Netzdienst in der Speicherreihung entsprechend dem Netzdienst, umfasst das Verfahren ferner:
Bestimmen, durch Abfragen, ob Daten in die Speicherreihung entsprechend dem Netzdienst in einem vorab bestimmten Zeitraum eingestellt werden; und
Lösen der Entsprechung zwischen dem Netzdienst und der Speicherreihung, wenn keine Daten in die Speicherreihung entsprechend dem Netzdienst in dem vorab festgelegten Zeitraum eingestellt werden, und Freigeben der Speicherreihung entsprechend dem Netzdienst und des der Speicherreihung zugewiesenen Koordinierelements.

2. Verfahren gemäß Anspruch 1, **dadurch gekennzeichnet, dass** das Abfragen (101), gemäß einem Netzdienst, einer voreingestellten Entsprechungstabelle und das Erhalten (101) einer Speicherreihung entsprechend dem Netzdienst umfassen:
Abfragen (201), gemäß dem Netzdienst, der voreingestellten Entsprechungstabelle;
falls die Entsprechung zwischen dem Netzdienst und der Speicherreihung in der Entsprechungstabelle vorhanden ist, Erhalten (202) der Speicherreihung entsprechend dem Netzdienst aus der Entsprechungstabelle; und
falls die Entsprechung zwischen dem Netzdienst und der Speicherreihung in der Entsprechungstabelle nicht vorhanden ist, Zuweisen (203) einer entsprechenden Speicherreihung zu dem Netzdienst und Aufzeichnen der Entsprechung zwischen dem Netzdienst und der zugewiesenen Speicherreihung in der Entsprechungstabelle.

3. Verfahren gemäß Anspruch 1 oder 2, **dadurch gekennzeichnet, dass** es ferner umfasst:
Durchführen eines Abfragezugriffs auf alle Speicherreihungen gemäß einer voreingestellten Abfrageregel; und
Zuweisen eines Koordinierelements zu einer Speicherreihung, auf die zugegriffen wurde, wenn die Speicherreihung, auf die zugegriffen wurde, Daten speichert und ihr kein Koordinierelement zugewiesen ist.

4. Verfahren gemäß Anspruch 1, **dadurch gekennzeichnet, dass** es ferner umfasst:
Zuweisen eines sekundären Koordinierelements zum Benutzer; wobei das sekundäre Koordinierelement dafür ausgelegt ist, die Koordinierung für den Benutzer auszuführen.

5. Vorrichtung zum Koordinieren einer Reihung, die in einer Wegauswahlvorrichtung verwendet wird, welche Daten sendet, **dadurch gekennzeichnet, dass** sie umfasst:
eine Speicherreihung-Erhaltungseinheit (51), dafür ausgelegt, gemäß einem Netzdienst eine voreingestellte Entsprechungstabelle abzufragen, nachdem der von einem Benutzer gesendete Netzdienst empfangen wurde, und eine Speicherreihung entsprechend dem Netzdienst zu erhalten, wobei die Entsprechungstabelle eine Entsprechung zwischen dem vom Benutzer gesendeten Netzdienst und der Speicherreihung umfasst;
eine Datenspeichereinheit (52), dafür ausgelegt, Daten des Netzdienstes in der Speicherreihung entsprechend dem Netzdienst zu speichern; und
eine erste Koordinierelement-Zuweisungseinheit (53), dafür ausgelegt, der Speicherreihung ein Koordinierelement zuzuweisen;
wobei die Vorrichtung ferner umfasst:
eine Datenabfrageeinheit (56), dafür ausgelegt, nachdem die Daten entsprechend dem Netzdienst in der Speicherreihung entsprechend dem Netzdienst gespeichert worden sind, durch Abfragen zu bestimmen, ob Daten in die Speicherreihung entsprechend dem Netzdienst in einem vorab bestimmten Zeitraum eingestellt werden; und
eine Ressourcenfreigabeeinheit (57), dafür ausgelegt, die Entsprechung zwischen dem Netzdienst und der Speicherreihung zu lösen, wenn keine Daten in die Speicherreihung entsprechend dem Netzdienst in dem vorab festgelegten Zeitraum eingestellt werden, und die Speicherreihung entsprechend dem Netzdienst und das der Speicherreihung zugewiesene Koordinierelement freizugeben.

6. Vorrichtung gemäß Anspruch 5, **dadurch gekennzeichnet, dass** die Speicherreihung-Erhaltungseinheit (51) umfasst:
eine Entsprechungsabfrage-Untereinheit (511), dafür ausgelegt, gemäß dem Netzdienst die voreingestellte Entsprechungstabelle abzufragen;
eine Speicherreihung-Erhaltungsuntereinheit (512), dafür ausgelegt, falls die Entsprechung zwischen dem Netzdienst und der Speicherreihung in der Entsprechungstabelle vorhanden ist, die Speicherreihung entsprechend dem Netzdienst aus der Entsprechungstabelle zu erhalten; und
eine Speicherreihung-Zuweisungsuntereinheit (513), dafür ausgelegt, falls die Entsprechung zwischen dem Netzdienst und der Speicherreihung in der Entsprechungstabelle nicht vorhanden ist, dem Netzdienst eine entsprechende Speicherreihung zuzuweisen und die Entsprechung zwischen dem Netzdienst und der zugewiesenen Speicherreihung in der Entsprechungstabelle aufzuzeichnen.

7. Vorrichtung gemäß Anspruch 5 oder 6, **dadurch gekennzeichnet, dass** sie ferner umfasst:
eine Abfragezugriffeinheit (54), dafür ausgelegt, einen Abfragezugriff auf alle Speicherreihungen gemäß einer voreingestellten Abfrageregel auszuführen.

8. Vorrichtung gemäß Anspruch 7, **dadurch gekennzeichnet, dass** sie ferner umfasst:
eine zweite Koordinierelement-Zuweisungseinheit (55), dafür ausgelegt, einer Speicherreihung, auf die zugegriffen wurde, ein Koordinierelement zuzuweisen, wenn die Speicherreihung, auf die zugegriffen wurde, Daten speichert und ihr kein Koordinierelement zugewiesen ist.

9. Vorrichtung gemäß Anspruch 5, **dadurch gekennzeichnet, dass** sie ferner umfasst:
eine sekundäre Koordinierelement-Zuweisungseinheit (58), dafür ausgelegt, dem Benutzer ein sekundäres Koordinierelement zuzuweisen.

## Revendications

1. Procédé d'ordonnancement de files d'attente, **caractérisé en ce qu'**il comprend :
l'interrogation (101), par un dispositif de routage en fonction d'un service de réseau,
d'une table de correspondances prédéfinies après la réception du service de réseau envoyé par un utilisateur, et l'obtention (101) d'une file d'attente de stockage correspondant au service de réseau, dans lequel la table de correspondances prédéfinies comprend une correspondance entre le service de réseau et la file d'attente de stockage ;
le stockage (102) des données du service de réseau dans la file d'attente de stockage correspondant au service de réseau ; et
l'attribution (103) d'un ordonnanceur à la file d'attente de stockage ;
le procédé comprenant en outre, après le stockage (102) des données correspondant au service de réseau dans la file d'attente de stockage correspondant au service de réseau :
la détermination, par interrogation, qu'il existe ou non des données placées dans la file d'attente de stockage correspondant au service de réseau dans une plage de temps prédéterminée ; et
la rupture de la correspondance entre le service de réseau et la file d'attente de stockage s'il n'existe pas de données placées dans la file d'attente de stockage correspondant au service de réseau dans la plage de temps prédéterminée, et la libération de la file d'attente de stockage correspondant au service de réseau et de l'ordonnanceur attribué à la file d'attente de stockage.

2. Procédé selon la revendication 1, **caractérisé en ce que** l'interrogation (101), en fonction d'un service de réseau, d'une table de correspondances prédéfinies, et l'obtention (101) d'une file d'attente de stockage correspondant au service de réseau comprennent :
l'interrogation (201), en fonction du service de réseau, de la table de correspondances prédéfinies ;
si la correspondance entre le service de réseau et la file d'attente de stockage existe dans la table de correspondances, l'obtention (202) de la file d'attente de stockage correspondant au service de réseau à partir de la table de correspondances ; et
si la correspondance entre le service de réseau et la file d'attente de stockage n'existe pas dans la table de correspondances, l'attribution (203) au service de réseau d'une file d'attente de stockage correspondante, et l'enregistrement de la correspondance entre le service de réseau et la file d'attente de stockage attribuée dans la table de correspondances.

3. Procédé selon la revendication 1 ou 2, **caractérisé en ce qu'**il comprend en outre :
l'exécution d'un accès par sondage sur toutes les files d'attente de stockage en fonction d'une règle de sondage prédéfinie ; et
l'attribution d'un ordonnanceur à une file d'attente de stockage sollicitée quand la file d'attente de stockage sollicitée stocke des données et n'a pas d'ordonnanceur attribué.

4. Procédé selon la revendication 1, **caractérisé en ce qu'**il comprend en outre :
l'attribution d'un ordonnanceur secondaire à l'utilisateur, dans lequel l'ordonnanceur secondaire est configuré pour effectuer un ordonnancement sur l'utilisateur.

5. Appareil d'ordonnancement de files d'attente, utilisé dans un dispositif de routage qui envoie des données, **caractérisé en ce qu'**il comprend :
une unité d'obtention de file d'attente de stockage (51), configurée pour interroger, en fonction d'un service de réseau, une table de correspondances prédéfinies après la réception du service de réseau envoyé par un utilisateur, et obtenir une file d'attente de stockage correspondant au service de réseau, dans lequel la table de correspondances prédéfinies comprend une correspondance entre le service de réseau envoyé par l'utilisateur et la file d'attente de stockage ;
une unité de stockage de données (52), configurée pour stocker des données du service de réseau dans la file d'attente de stockage correspondant au service de réseau ; et
une première unité d'attribution d'ordonnanceur (53), configurée pour attribuer un ordonnanceur à la file d'attente de stockage ;
l'appareil comprenant en outre :
une unité d'interrogation de données (56), configurée pour, après le stockage des données correspondant au service de réseau dans la file d'attente de stockage correspondant au service de réseau, déterminer, par interrogation, qu'il existe ou non des données placées dans la file d'attente de stockage correspondant au service de réseau dans une plage de temps prédéterminée ; et
une unité de libération de ressource (57), configurée pour rompre la correspondance entre le service de réseau et la file d'attente de stockage s'il n'existe pas de données placées dans la file d'attente de stockage correspondant au service de réseau dans la plage de temps prédéterminée, et libérer la file d'attente de stockage correspondant au service de réseau et l'ordonnanceur attribué à la file d'attente de stockage.

6. Appareil selon la revendication 5, **caractérisé en ce que** l'unité d'obtention de file d'attente de stockage (51) comprend :
une sous-unité d'interrogation de correspondance (511), configurée pour interroger, en fonction du service de réseau, la table de correspondances prédéfinies ;
une sous-unité d'obtention de file d'attente de stockage (512), configurée pour, quand la correspondance entre le service de réseau et la file d'attente de stockage existe dans la table de correspondances, obtenir la file d'attente de stockage correspondant au service de réseau à partir de la table de correspondances ; et
une sous-unité d'attribution de file d'attente de stockage (513), configurée pour, quand la correspondance entre le service de réseau et la file d'attente de stockage n'existe pas dans la table de correspondances, attribuer au service de réseau une file d'attente de stockage correspondante, et enregistrer la correspondance entre le service de réseau et la file d'attente de stockage attribuée dans la table de correspondances.

7. Appareil selon la revendication 5 ou 6, **caractérisé en ce qu'**il comprend en outre :
une unité d'accès par sondage (54), configurée pour exécuter un accès par sondage sur toutes les files d'attente de stockage en fonction d'une règle de sondage prédéfinie.

8. Appareil selon la revendication 7, **caractérisé en ce qu'**il comprend en outre :
une seconde unité d'attribution d'ordonnanceur (55), configurée pour attribuer un ordonnanceur à une file d'attente de stockage sollicitée quand la file d'attente de stockage sollicitée stocke des données et n'a pas d'ordonnanceur attribué.

9. Appareil selon la revendication 5, **caractérisé en ce qu'**il comprend en outre :
une unité d'attribution d'ordonnanceur secondaire (58), configurée pour attribuer un ordonnanceur secondaire à l'utilisateur.
